(19) **Europäisches Patentamt / European Patent Office / Office européen des brevets**

(11) **EP 2 957 922 B1**

(12) **EUROPEAN PATENT SPECIFICATION**

(45) Date of publication and mention
of the grant of the patent:
**26.07.2017 Bulletin 2017/30**

(51) Int Cl.:
*H04W 64/00* (2009.01)     *G01S 5/02* (2010.01)
*G01S 5/14* (2006.01)     *H04W 76/00* (2009.01)

(21) Application number: **14172607.5**

(22) Date of filing: **16.06.2014**

(54) **LOCATING MOBILE USERS IN EMERGENCY**

AUFFINDUNG MOBILER BENUTZER IM NOTFALL

LOCALISATION D'UTILISATEURS MOBILES EN CAS D'URGENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(73) Proprietor: **FUJITSU LIMITED**
**Kawasaki-shi,**
**Kanagawa 211-8588 (JP)**

(72) Inventors:
• **Hunukumbure, Rajaguru Mudiyanselage Mythri**
**Hillingdon, UB8 3WF (GB)**

• **Bhaskaran, Balakrishnan**
**Exeter, EX4 9DR (GB)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
**EP-A2- 1 289 331**     **GB-A- 2 375 021**
**US-A1- 2002 168 989**     **US-A1- 2003 134 647**
**US-A1- 2012 302 254**

EP 2 957 922 B1

## Description

Field of the Invention

The present invention relates to a method of locating users of mobile devices in a natural or man-made emergency situation such as an extreme weather event, earthquake or even a poisonous gas leak etc., either for issuing warning messages to such users, or for assisting emergency services in reaching the users.

Background of the Invention

Mobile networks are widely known in which base stations (BSs) provide "cells" and wirelessly communicate with mobile devices within range of the BSs. Usually, a mobile device can detect signals from more than one cell (and thus, more than one base station) at a time, and as the device moves out of the coverage area of one cell, it is handed over to an adjacent cell which it has detected. The base station antennas are usually mounted on towers or masts to increase the area of ground covered. The cells are arranged in a network to cover a geographical area more or less seamlessly, and more than one network may be available in a given area, operated by different network operators. Although sharing of network infrastructure among network operators is possible, usually (and particularly in rural areas and developing countries) each network will have its own base stations. Each network is referred to as a PLMN or Public Land Mobile Network, and has a network identifier or PLMN-ID which is broadcast to users of the network. Each cell within a given network has its own ID (cell ID) which is likewise broadcast to mobile devices within range.

Various technical standards - Radio Access Technologies or RATs - exist for mobile networks, including so-called second-generation (2G) networks such as GSM, third-generation (3G) networks such as UMTS, and fourth-generation (4G) networks including WiMAX and LTE/LTE-A. In such networks, the base stations are generally called NodeBs (or eNodeBs in the case of LTE) and the mobile devices are called user equipments or UEs. In addition to the above mentioned base stations and mobile devices, there are higher-level nodes in the mobile network such as a base station controller, connected to multiple base stations, and a central controller such as an operations and maintenance centre.

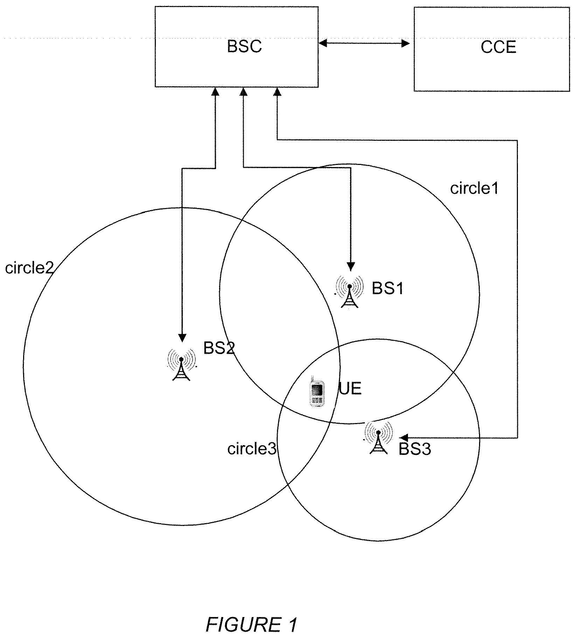

Various techniques are known for locating users of mobile devices by using the properties of the mobile network, including trilateration (or multilateration), triangulation, and angle-of-arrival techniques. Trilateration will be briefly explained by way of example, with respect to Figure 1.

Figure 1 shows base stations BS1, BS2 and BS3 all of which are within range of a mobile device UE. The base stations are connected to a base station controller, BSC, which in turn is connected to a central control entity, CCE, for example an operations and maintenance centre.

Trilateration works by the mobile device measuring the power of signals received from each of the base stations positioned in different geographical locations, and reporting the measurement results. Signals are transmitted from each base station with a given transmission power, but this power is attenuated as the signals travel through the air to the mobile device, so-called path loss. By comparing the received power at the mobile device by the transmitted power of each base station, the distance from each base station to the mobile device can be estimated.

In its simplest form, trilateration involves circles drawn on a plane. A circle drawn round each base station, at the estimated distance, indicates the possible positions of the mobile device. This is shown in the Figure as circle 1 around BS1, circle 2 around BS2, and circle 3 around BS3. It should be noted that these circles are not the same as the cell borders, which in general would extend beyond the circles shown in the Figure and need not be circular in shape. Where the base stations have different (x,y) coordinates in the plane, three circles are sufficient to pinpoint the location of the mobile device.

BS1, BS2 and BS3 each transmit signals with a known power to the UE, which measures the received signal strength and reports the results (usually, by transmitting a report to one "serving" base station among BS1, BS2 and BS3). The measurement results and transmitted powers are notified to the central control entity CCE 20 via the base station controller BSC. With knowledge of the frequency of transmission and a path loss model (which can be accurate for free space), the central control entity can then estimate the distance of the UE from each base station, or in other words the radius of each of circle 1, circle 2 and circle 3. Alternatively the calculations could be performed in the base station controller BSC or in the serving base station.

An approximation of the distance d from each base station to the mobile device can be obtained from the following equation:

$$P_r = P_t + 20 \log (\lambda/4\pi) + 10n \log(1/d)$$

where:

Pt is the transmitted power (in dBm)
Pr is the received power
$\lambda$ is the wavelength
n is the path loss exponent

The path loss exponent n = 2 in free space, but will be greater than 2 in the presence of obstacles, such as in built-up areas. The exact value will be determined empirically, depending on field test results (if available) and the amount of clutter (buildings, foliage etc.) in the area.

Knowing the location of each BS, a circle of radius d and centred on the BS location can then be drawn. In an ideal case, the circles intersect at a single point thereby localizing the mobile device precisely. In practice, owing to uncertainties in the estimation, it is more likely that there is a region of uncertainty as exemplified in the Figure, locating the mobile device less precisely. In that case an estimate of the location can be made by finding the position which minimises the distance to all the circles, for example using least-square estimation. Accuracy can be improved by adding a fourth or further base station - so-called multilateration.

In reality, of course, mobile devices and base stations do not all exist in the same plane. However, a more general case of trilateration or multilateration can position a mobile device in three dimensions in the same way, by drawing a sphere around each base station. Consequently, it is possible to position a mobile device user in height (altitude) as well as latitude and longitude.

Triangulation is a related technique of determining the location of a point by measuring angles to that point from the ends of a fixed base line, which may be for example a line joining two base stations of known location. The point to be located then becomes the third apex of a triangle having one known side and two known angles.

Angle of arrival (in the present context) is a technique for calculating the direction in which signals are received at a base station from a mobile device, at each of multiple antenna elements of the base station. This can be done by measuring the very small time differences in arrival time at the antenna elements By combining the results from two or more base stations, the mobile device's location can be found.

Meanwhile, high-end smartphones are increasingly being equipped with GPS (Global Positioning System) capability, allowing them to know (and report) their locations directly, without requiring the use of trilateration or other indirect locating techniques. However, at present the prevalence of such high-end phones is very low in developing countries or in remote areas.

Thus, several techniques are available for localizing (finding positions of) users of mobile devices. Potentially, any of these techniques might be employed in emergency situations, for example to send targeted messages to users or to alert emergency services to the locations of endangered users. However, there are many situations where none of these techniques can be applied.

GPS capability is usually available only with high end smartphones, while rural populations, especially in developing countries, tend to use low cost feature phones without GPS capabilities. Meanwhile, the triangulation and trilateration techniques require that the mobile handset receive signals from at least three base stations at different locations. In rural areas, typical Macro base stations cover large areas (in the order of tens of square kilometers) and many of the users in these areas see only a single base station (in terms of detectable signal strength). This is also the case in LTE networks using carrier aggregation, where a single physical cell site provides multiple logical cells so that the different locations needed for indirect localization are not present.

Consequently, locating a sub-set of these users who will potentially be impacted by a localized disaster or emergency event requires novel techniques, which does not involve costly modifications to the existing cellular infrastructure.

As will be apparent from the earlier discussion, trilateration and other indirect locating techniques require a mobile device to receive signals from multiple base stations. It is possible to set up temporary or ad-hoc base stations specifically for emergency use (for example, mounted on the back of a vehicle). However, some disasters (like a flash flood) and man-made emergency events (like a poisonous gas leak) require very quick delivery of warning messages to potential victims in a target area, which does not allow time for any physical setting up of ad-hoc base stations.

US2002/168989 discloses a time-of arrival(TOA) method of determining the position of a cellular handset, for example a phone or a PDA, comprising causing the wireless terminal (MWT) to adapt to operate on a first network (GSM) having a plurality of first base stations (GSM 1 to GSM 3) and effecting position measurements with respect to ranging signals transmitted by one or more of the first base stations and causing the wireless terminal to adapt to operate on a second network (UMTS) having a plurality of second base stations (UMTS 1 to UMTS 3) and effecting position measurements with respect to ranging signals transmitted by one or more of the second base stations. The position measurements are combined and the position of the wireless terminal is determined from the combined measurements. The position fix may be determined by the wireless terminal (MWT) or a remote station to which the position measurements are relayed by the wireless terminal.

EP1289331 discloses an E-OTD method for locating a mobile station using measurement information related to arrival of signals transmitted from base stations of different operators for obtaining the base station locations. When one operator does not have enough base stations for providing measurement information for location calculation, the SMLC of that operator acquires measurement information of base stations from at least one other operator using SMLC-SLMC communication protocol.

US2003/134647 and US2012/302254 disclose the use of mobile devices with known locations to help in determining the location of another mobile device if there are less than three base stations available.

Summary of the Invention

Embodiments of the present invention aim to locate mobile devices (and thereby, their human users) in an emergency, where "emergency" may be defined as a developing situation which may endanger the safety of users and in which locating the users is critical to provide accurate warnings and guidance on safety procedures to the users.

According to a first aspect of the present invention, there is provided a method of locating a mobile device in an emergency comprising: in at least one first base station at a known first location, wirelessly communicating with the mobile device by transmitting signals having a first power, including a network identifier of a first network recognised by the mobile device, and a cell identifier for the first network; in at least one second base station at a known second location, temporarily transmitting signals having a second power, including said network identifier of the first network, and a cell identifier for the first network; in the mobile device, measuring the signals transmitted by the first and second base stations and reporting measurement results to the first base station; and locating the mobile device based on the measurement reports, first and second transmission powers, and first and second locations, wherein said at least one second base station belongs to a second network to which the mobile device is not subscribed, the second network being different from the first network to which the mobile device is subscribed, the second base station temporarily includes said network identifier of the first network and said cell identifier for the first network in its transmitted signals.

Here, the "network identifier" is for example a PLMN-ID, and the "cell identifier" may be a cell ID. A PLMN-ID uniquely identifies a wireless network, whilst a cell ID uniquely identifies a cell within a wireless network or at least a given geographical area of a wireless network. Thus, a "cell identifier for a network" means a cell identifier suitable for identifying a cell within that network, as being a cell belonging to that network but distinct from neighbouring cells.

The cell identifier for the first network should be a new identifier (not the same as the cell identifier in the second network) to cause the mobile device to perform measurements on the cell.

In this embodiment the method may further comprise determining whether the second base station exists within range of the mobile device and if so, instructing the second base station temporarily to include the network identifier of the first network and the cell identifier for the first network in its transmitted signals along with a network identifier of the second network and a cell identifier for the second network. In this way, there is no interruption of service to users of the second base station, which may continue to conduct wireless communication with the second base station as normal on the basis of the network identifier of, and cell identifier for, the second network, whilst the second base station also mimics a base station of the first network.

In a second embodiment to be described (which may be combined with the first embodiment), at least one other mobile device is configured to temporarily operate as at least one the second base station at said known location, respectively, in order to transmit the signals with the second transmission power, network identifier of the first network and cell identifier for the first network.

In this embodiment, the second location may be known by using a positioning function of the another mobile device. Alternatively the second location may become known by a user of the another mobile device taking that device to a known location.

In any embodiment, the method may further comprise:

causing the second base station to transmit the network identifier of the first network and the cell identifier for the first network in response to a determination that an emergency situation exists; and causing the second base station to cease transmitting the network identifier of the first network and the cell identifier for the first network when the emergency situation is determined no longer to exist.

Such a determination may be made at (or notified to) a control centre of the first network, which then communicates with the second network to cause the steps referred to above.

Preferably, whilst the emergency situation exists within a target area, a second base station belonging to a second network different from the first network alternates periods of transmitting signals with the network identifiers of and cell identifiers for both the first and second networks, with periods of transmitting signals with only the network identifier of the second network and cell identifier for the second network.

It is possible for the first base station to provide a reciprocal "mimicking" service to the network of the second base station. Thus, the first base station may alternate periods of transmitting signals with the network identifier of the first network and cell identifier for the first network, with periods of transmitting signals with the network identifiers of and cell identifiers for both the first and second networks. The periods involved here may correspond with those adopted in the second base station.

In any case the method preferably further comprises, after locating the mobile device, the first base station sending a message to the mobile device which takes account of the determined location. Such a message may, for example, indicate an escape route or muster point selected on the basis of the determined location.

Trilateration (or multilateration) is an example of a locating technique which can be employed in the present invention. In this case, the number of first and second base stations is at least three in total, and the locating comprises trilateration of the mobile device using measurement reports on the at least three base stations.

According to a second aspect of the present invention, there is provided a wireless communication system comprising: a mobile device; locating means for locating the mobile device; at least one first base station at a known first location, arranged for wireless communication with the mobile device by transmitting signals having a first power, the signals including a network identifier of a first network recognised by the mobile device and a cell identifier for the first network; and at least one second base station at a known second location; wherein: the at least one second base station is responsive to an emergency notification to temporarily transmit signals having a second power, the signals including the network identifier of the first network and a cell identifier for the first network; the mobile device is arranged to measure the signals transmitted by the first and second base stations and to report measurement results to the first base station; and the locating means is arranged to locate the mobile device based on the measurement reports, first and second transmission powers, and first and second locations; wherein said at least one second base station belongs to a second network to which the mobile device is not subscribed, the second network being different from the first network to which the mobile device is subscribed, the second base station configured to temporarily include said network identifier of the first network and said cell identifier for the first network in its transmitted signals.

Here, the "locating means" may be, for example, a control centre of the first network. Alternatively it may be an emergency command centre linked to a control centre of each respective wireless network.

According to a third aspect of the present invention, there is provided a base station configured to operate as a second base station in the wireless communication system as defined above, or in other words a base station capable of acting as a "mimicking" base station by adopting a network identifier of, and cell identifier for, the first network.

According to a fourth aspect of the present invention, there is provided a mobile device configured to temporarily operate as a second base station at the known location in the wireless communication system as defined above, in order to transmit the signals having the second transmission power and including the network identifier of the first and cell identifier for the first network. This mobile device may be a "special mobile handset" as referred to later, but need not be any different in hardware terms from a normal mobile handset.

According to a further aspect of the present invention there is provided software as defined by claim 14. In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between base stations of one or more wireless networks, and a mobile device. The "mobile device" referred to here, also referred to as a subscriber station or UE, may take any form suitable for transmitting and receiving such signals. In preferred embodiments of the present invention, the base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. However, subject to the functional requirements of the invention, the base stations may take any other form suitable for transmitting to, and receiving signals from, mobile devices.

Brief Description of the Drawings

Reference is made, by way of example only, to the accompanying drawings in which:

Figure 1 shows the principle of mobile user localization by trilateration;
Figure 2 shows sharing of multiple operator networks for mobile user localization;
Figure 3 shows mobile stations configured as temporary base stations in an embodiment of the present invention;
Figure 4 is a flowchart of steps in embodiments of the present invention;
Figure 5 is a schematic diagram of a UE to which the present invention may be applied; and
Figure 6 is a schematic diagram of a base station to which the present invention may be applied.

Detailed Description

As already mentioned, locating mobile users in localized natural or man-made disaster and emergency situations to warn an impending hazard has been challenging, largely due to the non-availability of an adequate network of base stations in the target area. Embodiments of the present invention provide a methodology that makes an innovative use of base stations from other networks in the area for locating a mobile user. A specific embodiment further provides a novel way of configuring other hand-held devices in the area as temporary base stations, which could then be used to locate mobile users more accurately to deliver early warning messages.

Embodiments are aimed at providing multiple base stations for the mobile devices in the target area, so that they can measure and report multiple signal strengths and the network (or original base station) can carry out trilateration or one of the other locating techniques mentioned earlier, to estimate the locations of mobile devices. The location of an operating mobile device can normally be assumed also to be the location of the user of that device.

Depending on the user location, the mobile users can be provided with personalised warning message with a specified threat level (severe, moderate etc.). This enables the message recipient to treat the warning seriously and take the suggested precautionary measures. In particular, by knowing the location of the user the message can be made specific in terms of an escape route to take for example.

A first embodiment is based on sharing of multiple operator networks for the purpose of locating users. Multiple operator networks in the same geographical area collaborate and broadcast the identities of the other networks, enabling the user handsets to see multiple measurable signals.

In the LTE standards for example, each operator network contains a specific PLMN-ID (Public Land Mobile Network ID) which is transmitted by the base stations of that network. This allows users to connect to the network for which they have subscribed, whilst permitting various networks of different operators to co-exist in the same geographical area. That is, a mobile device first recognises the PLMN-ID of a network to which the user has subscribed, then decodes the cell ID of a cell belonging to that network. In effect, the mobile device does not "see" the other networks. Although it is conventional to permit users access to other networks for emergency calls, it is not conventional for mobile devices to measure signal strengths of other networks to which they are not subscribed.

The first embodiment changes this conventional scheme by having the PLMN-ID of one network transmitted, not only by the base stations of that network, but temporarily also by the base stations of other networks in the geographical area. These base stations of other networks are referred to below as "mimicking" base stations. A new cell-ID is also transmitted along with the PLMN-ID by each mimicking base station, so the mobiles will identify this as a new cell in the operator's network. Thus, the mimicking BS transmits a new cell-ID, unique to the network as defined by the PLMN-ID, so the UEs of this network will see it as a new cell in the network and provide measurement reports. Having a new cell ID is important for the network as well, to precisely locate (without duplication) the mimicking BS and relate the measurement results to this location.

LTE standards allow the mobiles to make interfrequency measurements (for example measurements in adjacent 5MHz/10MHz bands), so the base stations do not need to re-tune to the specific operator's carrier frequency. Once this is enacted and the mobiles notified to provide measurements, the mobiles measure the signal strengths on the reference signals in the mimicking base stations and provide the results to the original base station.

In LTE-based wireless communication systems (and likewise in systems based on 3G or 2G standards) the operators' frequency bands reside close to each other in the spectrum, and hence it is technically not difficult for the mobile to provide these measurements. Moreover, modern mobile handsets designed for 4G can also detect 2G or 3G networks belonging to the same operator. Such multi-mode phones can operate in the various different frequency bands of 2G, 3G and 4G networks, widening the potential availability of base stations as "mimicking" base stations.

The mimicking base stations need not offer to support any of the devices from the other operator networks in either active or idle modes. Mobile devices being localized do not actually connect to the other operator networks, but merely make signal strength measurements on those other networks. Thus, the mimicking base stations will simply operate in this mode (broadcasting the other PLMN-IDs) for a short period until the localization of the devices is complete and then revert back to the original operation mode with only a single PLMN-ID. In this way, normal service to users of the network should not be affected.

In many rural areas, different operators may have different target population pockets as their target markets and hence operate from different sites. These factors enable the measurements to be taken on different signals originating from these multiple base stations and enabling the localization of the mobile devices. A network whose users benefit from this scheme can reciprocate the service to other networks in the area, enabling localizing of users belonging to multiple operator networks. In an emergency situation, this is a vital aspect, as many of the target users in the target area can be notified.

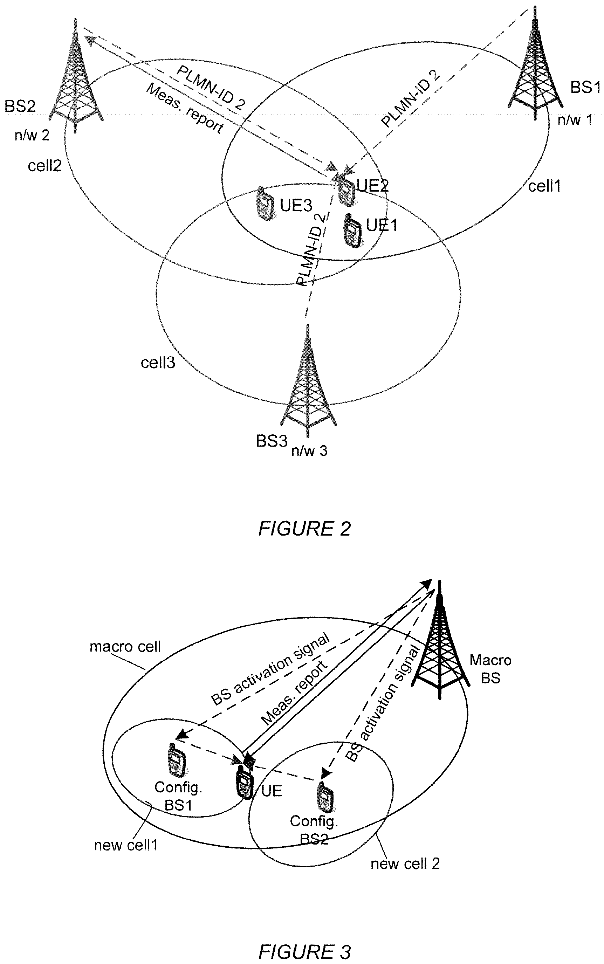

Figure 2 illustrates the first embodiment of the present invention.

Figure 2 shows three base stations BS1, BS2, BS3 within range of mobile devices UE1, UE2 and UE3. Each base station belongs to a different network 1-3 as indicated by "n/w 1", "n/w 2" and "n/w 3". As already mentioned, these networks need not use the same RAT. The ellipses around each base station BS1, BS2, BS3 schematically illustrate cells, namely cell1, cell2 and cell3 respectively, of each base station.

Each base station normally broadcasts only the PLMN-ID of its own network as already mentioned. Thus, BS1 usually broadcasts PLMN-ID1, BS2 usually broadcasts PLMN-ID2, and BS3 usually broadcasts PLMN-ID3. Each PLMN-ID is a periodically-repeated bit pattern. It is assumed that each of the UEs connects to only one network at a time, more particularly that UE1 belongs to network 1 by being connected to cell1, UE 2 to network 2 via cell2, and UE3 to network 3 via cell3. Conventionally, therefore, UE1 would only "see" network 1 and would not be aware of the base stations of other networks in the vicinity.

Suppose that the operator of network 2 wishes to locate the user of UE2. In the first embodiment, this can be done with the assistance of BS1 and BS3 belonging to the other networks 1 and 3. That is, BS1 and BS3 temporarily duplicate the PLMN-ID for network 2, PLMN-ID2, in addition to their own PLMN-IDs. This can be done, for example, by adding the bit patterns of network 2 to the cycle of broadcast PLMN-IDs, so that within a complete cycle, BS1 appears first to belong to network 1, then to both network 1 and 2, then again to network 1, and so on. As will be apparent, this principle can be extended to include further PLMN-IDs as required.

To explain this further, although technically, the PLMN-ID bit patterns are cyclically repeated one after the other, the UEs also listen to them periodically at a slower rate. So the UEs of network 1 will not leave the cell of BS1 simply because it transmits PLMN-ID2. Each UE will periodically listen to its own PLMN-ID (which it recognizes) and then the cell-ID, to make sure it is still in the coverage area. Because of the slow repetition of this process, other PLMN-IDs can be inserted into this cycle. Consequently, under the proposed reconfiguration, it is possible for a BS to transmit all the PLMN-IDs and cell-IDs in its cyclic sequence, and the UEs belonging to each network will identify the BS as one of its own network cells. There is no need for BS1 or BS3 to re-tune to a different frequency: if networks 1, 2 and 3 employ the same RAT then it is likely that the same portion of spectrum will be licensed for all three networks, and if any of the networks is of a different RAT then a multi-mode mobile device will still be able to detect them.

Although not shown in Figure 2 for simplicity, each BS also broadcasts a cell ID, typically in the form of a numerical value which uniquely identifies the cell (at least among the cells within a given geographical area). Each base station normally broadcasts only a cell ID (for each cell it controls) of its own network.

In the present embodiment, in similar fashion to the PLMN-ID, BS1 and BS3 each adopt a respective cell ID suited to network 2 (as may be advised by network 2), in effect providing new cells of network 2. These cell IDs should be new IDs (not the same as the normally-broadcast cell IDs) so as to be detected as new cells by the UEs, prompting the UEs to measure the signal strengths from BS1 and BS3. It should be emphasized that these new cells are used only to obtain signal strength measurements and not to support users of the other network. This new PLMN_ID and cell ID transmission will be terminated after the required measurements are obtained by the network.

UE2 now treats cell 1 and cell 3 as neighbour cells and provide measurement reports on all three cells to BS2. An example of such a measurement report would be a Received Signal Strength Indicator (RSSI). BS2 (or a higher-level node of network 2 such as a base station controller, not shown) can now localize UE2 with the aid of these measurements. In addition to the signal strength measurement from UE2, the calculation involves the frequency and transmitted power of the signals from each base station (which will be known by each base station concerned and can be notified to BS2 or the higher-level node), and the location of each base station (which again can be assumed to be known, at least in rural areas where the positioning of base stations is planned).

The same procedure can be reciprocated for the networks 1 and 3. That is, after a time period in which all three networks broadcast PLMN-ID2 in addition to their own network ID (if different), the three networks may switch to additionally broadcasting PLMN-ID1 and later, to PLMN-ID3. In this way, UE1 and UE3 can likewise be located with the help of the base stations in all three networks. By repeating the process for all networks, there is no need to decide which network to focus on for locating users. On the other hand, if one network is dominant in the target area then it may be preferred to concentrate on this network, using base stations of the other networks as mimicking base stations.

Incidentally, in the above explanation it was assumed that there are three base stations each belonging to a different network, but of course the same principle could be applied with more than three base stations, or where multiple base stations belong to the same network. Moreover, two base stations are sufficient for locating users by angle-of-arrival techniques. However, the accuracy of estimation of all these techniques (except GPS) is improved by involving more base stations.

A second embodiment addresses the situation where there are insufficient base stations available in the geographical area of interest, i.e. the target area for warning or rescue of users. This may be because there is only a single operator covering the target region with only one base station being visible to the users. In developing countries, this is a common scenario in rural areas, which are covered by only the dominant operator in the country. Also, even if multiple operators are present and they happen to share the same physical tower for their base stations, the first embodiment is not applicable. This second embodiment becomes useful in this scenario as well.

The arrangement in the second embodiment is shown in Figure 3.

It is assumed that a mobile device, UE in Figure 3, is in communication with a serving base station, Macro BS, proving a macro cell as shown, but that there may not be any other conventional base stations in the vicinity in any network. Certain mobile devices labelled Config. BS1 and Config. BS2 in the Figure, are pre-configured to operate as temporary base stations, when instructed by a BS activation signal transmitted from the serving base station.

These mobile devices Config. BS1 and Config. BS2 (and referred to below as special handsets) can be smart phones with GPS or satellite-phone capability, or their users can be advised to be at a certain, known location when prompted by the network to execute operations as a base station. The locations of these special handsets is therefore known.

This is a particularly relevant embodiment in countries prone to natural disasters and there are existing measures where certain selected individuals play a leading role in evacuating others in case of a disaster warning. These individuals can be provided with the special mobile handsets, which can transmit PLMN-IDs and a new cell ID when required, and may also have GPS capabilities. In addition the special handsets can be configured to transmit at higher power in this emergency mode. The transmit power can be reported to the serving base station and thus is also known.

Whilst the special handsets may have hardware adapted for this purpose (such as a special antenna or power supply), it should be noted that this is not essential, and an off-the-shelf smartphone, suitably programmed, may serve for this purpose. It should further be noted that it is not required for Config. BS1 or Config. BS2 to provide wireless communication services to the mobile device UE, merely to transmit the PLMN-ID and cell IDs. Assuming an FDD system, the main change needed over normal handset operation is the ability of transmit PLMN-ID(s) at the downlink frequency, which involves a minor retuning of the transmit frequency to the downlink band. It is preferable for the PLMN-ID to be transmitted with higher power than used in normal handset operation, if possible.

The mobile device UE and any other (ordinary) mobile devices within range of the signals transmitted by Config. BS1 or Config. BS2 will identify new cell 1 and new cell 2 as shown in Figure 3, and provide signal strength measurements to the original base station (macro BS), as indicated by Meas. report. The original base station or a central controller then executes trilateration methods to localize the mobiles providing these measurements in the same way as before, knowing the transmit powers and locations of the special handsets.

Determining the exact location of these UEs with the signal strength measurements will be more difficult than in the first embodiment. If the special handset configured as a new 'base station' is transmitting from the ground level, the signal propagation characteristics will be very different from tower based transmissions. Different path loss models will have to be employed which will possess a higher degree of inaccuracy. The transmissions from the special handsets may not reach beyond 200-250m radius.

To mitigate the above factors, ways may be found to raise the special handsets to a certain height, where they will achieve better and more predictable coverage distances. For example the user of the special handset may be instructed to go to the top of a hill, or to an upper-floor window of a tall building. Alternatively, since the special handset does not need a human user to be present once activated, simple mechanisms can be provided (like a pole and pulley system, or tethered balloon) to lift it above ground level.

In situations where the special handset is within the target area, even a simple blanket messaging to all the UEs who provide signal strength measurements from this new 'base station' will be effective. That is, the special handsets may receive a text message from the serving base station and broadcast it within the coverage range of the handset. Since the coverage area of the handset will be limited, it may be appropriate for the message to instruct all users who receive it to proceed to a stated muster point, for example.

Having multiple special handsets in the same area, able to perform secondary base station transmissions will increase the number of signals seen by the UEs and increase the accuracy of location calculations within the system. The user locations for these 'secondary base stations' would be pre-defined. For example, the village headman in a certain community can be given the special handset and he can be instructed to take the phone to a certain nearby, pre-defined location to execute this embodiment.

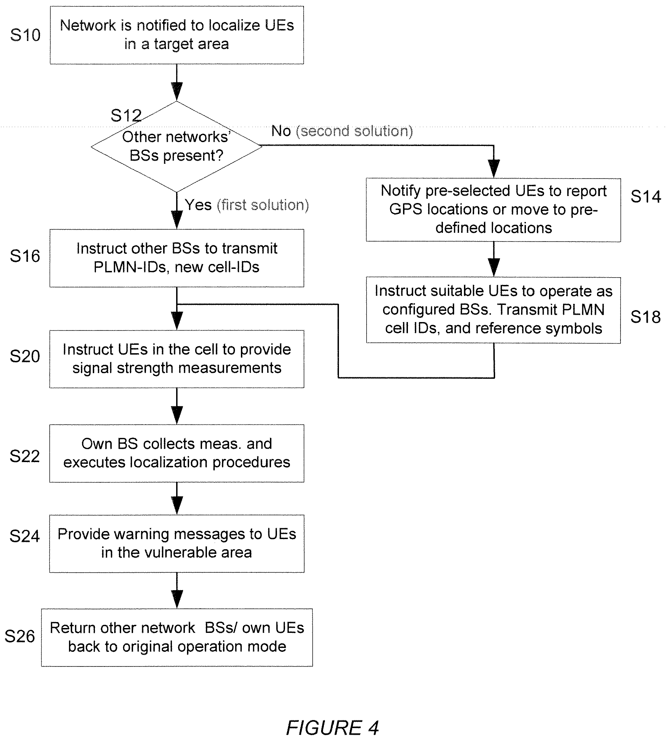

Figure 4 is a combined flowchart for both embodiments. Here, it is assumed that the first embodiment is given first preference and attempted before reverting to the second embodiment. However, the two embodiments can be executed independently as well. The method may be performed with respect to a single target area or separately with respect to any number of target areas.

Firstly, in step S10, an emergency condition in a target area is determined (or predicted), and the network is notified to localize UEs in the target area covered by the network. This may be for any of various reasons: for example to warn users of an impending situation such as a flood or gas cloud; or to locate users after an emergency has already occurred, to facilitate the provision of assistance by rescue or medical services. To notify "the network" means, for example, to notify the operator who is able to take action through a control centre such as the CCE shown in Figure 1.

In step S12, it is checked whether base stations of other networks are present in the area of interest. The network concerned can directly contact the other networks' control centres to ascertain automatically whether these networks have base stations serving the target area of interest. Alternatively this step can be done manually, for example by referring to a map of base station deployments maintained by a national licensing authority (such as OFCOM in the United Kingdom).

If other base stations are present, the first embodiment can be deployed and the flow proceeds to step S16, in which the base stations of other networks are instructed to transmit additional PLMN-ID(s) and cell ID(s) as discussed earlier. This can be achieved, for example, by the operator of one network contacting (either automatically, or with human intervention) the operator of one or more other networks operating in the area and securing their co-operation. Details of the PLMN-ID and cell IDs to be used will have been worked out in advance and kept on hand for emergency use. These details could also be stored in each base station in advance allowing immediate activation, if desired.

In the event that other operators' base stations are not available (S12, "N"), the flow proceeds to step S14 where the second embodiment is deployed. Thus, the pre-selected UEs (the special handsets referred to above) are instructed to report their GPS positions (if available), and/or their users are requested to move to the pre-arranged, known locations.

In step S18, the special handsets are configured as base stations, for example by activating pre-stored software which activates this function. Alternatively or in addition, any necessary configuration (such as the PLMN-ID and/or cell ID to be used) could be made by signalling from the serving cell in the area. The special handsets then transmit the PLMN-ID and cell ID as discussed earlier so as to operate as, or at least simulate, base stations.

Thus, in either case there are now a plurality of "base stations" in the area of interest, transmitting the same PLMN-ID and different cell IDs and detectable by UEs to be located.

Then in step S20, UEs in range of the serving cell (macro BS) are instructed to report measurements on all the cells they can detect, i.e., not only the serving cell of the same network operator, but cells of other operators (now configured as cells of the same network as the serving cell) and/or cells configured from the special handsets.

In step S22, the serving cell BS collects the measurements reported by each UE. The BS can distinguish measurements from different UEs by an ID code (such as a Radio Network Temporary Identifier, RNTI) included in each measurement report. The measurements are conveniently reported by a single message from each UE; alternatively if the same UE sends multiple reports, these can be collated on the basis of the ID code. An indirect locating technique such as trilateration is then performed using the reported measurements. Figure 4 shows this step as performed by the serving BS, but as already mentioned the calculation could be performed in a higher-level node of the network.

In step S24, the serving BS provides warning messages to users in the target area. By knowing the location of each user, these messages can be personalised with vital information such as where to take shelter.

Steps S20 - S24 may be repeated as often as required for the duration of the emergency, to track mobile users as they move about, or to more precisely estimate the location of immobile users.

In step S26, it is determined that the emergency no longer exists, or at least that it no longer affects the target area. For example, a control centre could notify this to the serving BS. Operation is then returned to the normal mode, in which BSs of other networks revert to their ordinary PLMN-ID/Cell ID, and special handsets revert to normal mobile device operation.

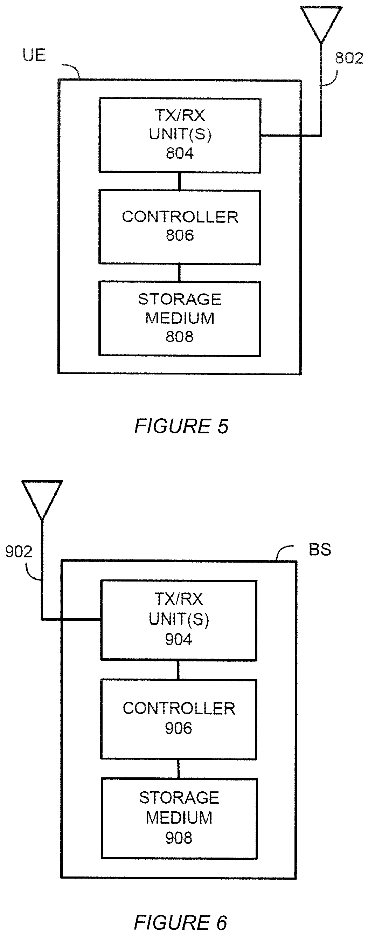

Figure 5 is a block diagram illustrating an example of a mobile device UE to which the present invention may be applied. The UE may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, including detecting the signal strengths of signals from each of the base stations, reporting the results etc. For example, the various functions described above may be embodied in the form of a computer program stored in the storage medium 808 and executed by the controller 806. The transmission/reception unit 804 is arranged, under control of the controller 806, to transmit signals such as measurement reports on cells, and receive signals such as an instruction to provide measurement reports, as discussed previously.

Figure 6 is a block diagram illustrating an example of a base station BS to which the present invention may be applied. The BS includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, including broadcasting a PLMN-ID and cell ID, receiving a measurement report from a UE being served by the base station, and so on. For example, the various functions described above may be embodied in the form of a computer program stored in the storage medium 908 and executed by the controller 906. The transmission/reception unit 904 is responsible for UE-specific signalling, such as instructions to UEs to provide measurement reports, and broadcast messages such as PLMN-IDs and cell IDs, under control of the controller 906.

Various modifications are possible within the scope of the invention.

Any of the embodiments and variations mentioned above may be combined in the same system. Features of one embodiment may be applied to any of the other embodiments. Thus, it is possible for one of the base stations temporarily transmitting with the required PLMN-ID to be a base station of another network, and another such base station to be a suitably-configured mobile device.

In any of the aspects or embodiments of the invention described above, the various features may be implemented in hardware, or as software modules running on one or more processors. The term GPS is to be interpreted broadly to cover any form of satellite-based positioning system including ones augmented by land-based infrastructure.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

Industrial Applicability

By making use of base stations from other networks in the area, or by configuring other hand-held devices in the area as temporary base stations, mobile users can be located in an emergency situation in a flexible manner using existing resources without the need for additional network infrastructure, thereby facilitating public safety and rescue efforts.

**Claims**

1. A method of locating a mobile device (UE2) in an emergency comprising:

    in at least one first base station (BS2) at a known first location, wirelessly communicating with the mobile device by transmitting signals having a first power and including a network identifier (PLMN-ID 2) of a first network (n/w 2) recognised by the mobile device and a cell identifier for the first network;
    in at least one second base station (BS1, BS3) at a known second location, temporarily transmitting signals having a second power and including said network identifier (PLMN-ID 2) of the first network (n/w 2) and a cell identifier for the first network;
    in the mobile device (UE2), measuring the signals transmitted by the first and second base stations and reporting measurement results to the first base station; and locating the mobile device based on the measurement reports, first and second transmission powers, and first and second locations,
    **characterized in that** said at least one second base station (BS1, BS3) belongs to a second network (n/w 1, n/w 3) to which the mobile device is not subscribed, the second network being different from the first network (n/w 2) to which the mobile device is subscribed, the second base station temporarily includes said network identifier of the first network and said cell identifier for the first network in its transmitted signals.

2. The method according to claim 1 further comprising determining (S12) whether a said second base station exists within range of the mobile device and if so, instructing (S16) the second base station temporarily to include the network identifier of the first network and said cell identifier for the first network in its transmitted signals along with a network identifier of the second network and a cell identifier for the second network.

3. The method according to any preceding claim wherein at least one other mobile device (Config. BS1, Config. BS2) is configured to temporarily operate as at least one said second base station at said known second location, respectively, in order to transmit said signals having the second transmission power and including the network identifier of the first network and cell identifier for the first network.

4. The method according to claim 3 wherein the second location is known by using a positioning function of said another mobile device.

5. The method according to claim 3 wherein the second location is known by a user of said another mobile device taking that device to a known location.

6. The method according to any preceding claim further comprising:

    causing the second base station to include in its transmitted signals the network identifier of the first network and said cell identifier for the first network in response to a determination that an emergency situation exists; and
    causing the second base station to cease including the network identifier of the first network and said cell identifier for the first network when the emergency situation is determined no longer to exist.

7. The method according to claim 6 wherein whilst the emergency situation exists, a said second base station belonging to a second network different from the first network alternates periods of transmitting signals including the network identifiers of and cell identifiers for both the first and second networks, with periods of transmitting signals with only the network identifier of the second network and cell identifier for the second network.

8. The method according to claim 7 wherein whilst the emergency situation exists, the first base station alternates periods of transmitting signals with the network identifier of the first network and cell identifier only for the first network, with periods of transmitting signals including the network identifiers of and cell identifiers for both the first and second networks.

9. The method according to any preceding claim further comprising, after locating the mobile device:

the first base station sending a message to the mobile device which takes account of the determined location.

10. The method according to any preceding claim wherein the number of said at least one first base station and second base station is at least three in total, and the locating comprises trilateration of the mobile device using measurement reports on the at least three base stations.

11. A wireless communication system comprising:

a mobile device (UE2); locating means for locating the mobile device;
at least one first base station (BS2) at a known first location, arranged for wireless communication with the mobile device by transmitting signals having a first power and including a network identifier (PLMN-ID 2) of a first network (n/w 2) recognised by the mobile device and a cell identifier for the first network; and
at least one second base station (BS1, BS3) at a known second location; wherein:

the at least one second base station is responsive to an emergency notification to temporarily transmit signals having a second power and including said network identifier (PLMN-ID 2) of the first network (n/w 2) and a cell identifier for the first network;
the mobile device is arranged to measure the signals transmitted by the first and second base stations and to report measurement results to the first base station; and
the locating means is arranged to locate the mobile device based on the measurement reports, first and second transmission powers, and first and second locations;
**characterized in that** said at least one second base station (BS1, BS3) belongs to a second network (n/w 1, n/w 3) to which the mobile device is not subscribed, the second network being different from the first network (n/w 2) to which the mobile device is subscribed, the second base station configured to temporarily include said network identifier of the first network and said cell identifier for the first network in its transmitted signals.

12. A base station (BS1, BS3) configured to operate as a second base station in the wireless communication system of claim 11.

13. A mobile device (Config. BS1, Config. BS2) configured to temporarily operate as a second base station at said known second location in the wireless communication system of claim 11, in order to transmit said signals having the second transmission power and including the network identifier of the first network and cell identifier for the first network.

14. Software which, when executed on a processor of a communications device, causes the device to operate as the base station of claim 12 or the mobile device of claim 13.

**Patentansprüche**

1. Verfahren zum Lokalisieren einer mobilen Vorrichtung (UE2) in einem Notfall, umfassend:

drahtlose Kommunikation mit der mobilen Vorrichtung durch Übertragung von Signalen, die eine Netzwerkkennung (PLMN-ID 2) eines ersten von der mobilen Vorrichtung erkannten Netzwerks (n/w 2) sowie eine Zellkennung des ersten Netzwerks enthalten, mit einer ersten Leistung in mindestens einer ersten Basisstation (BS2) mit bekanntem ersten Standort;
vorübergehende Übertragung von Signalen, die die Netzwerkkennung (PLMN-ID 2) des ersten Netzwerks (n/w 2) sowie eine Zellkennung des ersten Netzwerks enthalten, mit einer zweiten Leistung in mindestens einer zweiten Basisstation (BS1, BS3) mit bekanntem zweiten Standort;
Messen der von der ersten und der zweiten Basisstation übertragenen Signale in der mobilen Vorrichtung (UE2) und Berichten der Messergebnisse an die erste Basisstation; und
Lokalisieren der mobilen Vorrichtung auf der Grundlage der Messberichte, der ersten und der zweiten Übertragungsleistung sowie des ersten und des zweiten Standorts,
**dadurch gekennzeichnet, dass** die mindestens eine zweite Basisstation (BS1, BS3) zu einem zweiten Netzwerk (n/w 1, n/w 3) gehört, das nicht das Heimnetzwerk der mobilen Vorrichtung ist, wobei das zweite Netzwerk von dem ersten Netzwerk (n/w 2), das das Heimnetzwerk der mobilen Vorrichtung ist, verschieden ist, wobei die zweite Basisstation vorübergehend die Netzwerkkennung des ersten Netzwerks und die Zellkennung des ersten Netzwerks in seine übertragenen Signale aufnimmt.

2. Verfahren nach Anspruch 1, weiterhin umfassend das Bestimmen (S12), ob eine zweite Basisstation innerhalb des Bereichs der mobilen Vorrichtung vorhanden ist, und, falls dem so ist, Anweisen (S16) der zweiten Basisstation, vorübergehend die Netzwerkkennung des ersten Netzwerks und die Zellkennung des ersten Netzwerks zusammen mit einer Netzwerkkennung des zweiten Netzwerks und einer Zellkennung des zweiten Netzwerks in seine übertragenen Signale aufzunehmen.

3. Verfahren nach einem der vorhergehenden Ansprüche, wobei mindestens eine andere mobile Vorrichtung (Config. BS1, Config. BS2) dazu konfiguriert ist, vorübergehend als mindestens eine zweite Basisstation an dem bekannten zweiten Standort betrieben zu werden, um die Signale, die die Netzwerkkennung des ersten Netzwerks und die Zellkennung des ersten Netzwerks enthalten, mit der zweiten Übertragungsleistung zu übertragen.

4. Verfahren nach Anspruch 3, wobei der zweite Standort durch Verwenden einer Ortungsfunktion der anderen mobilen Vorrichtung bekannt ist.

5. Verfahren nach Anspruch 3, wobei der zweite Standort dadurch bekannt ist, dass ein Benutzer der anderen mobilen Vorrichtung die Vorrichtung zu einem bekannten Standort bringt.

6. Verfahren nach einem der vorhergehenden Ansprüche, weiterhin umfassend:

    Bewirken, dass die zweite Basisstation als Reaktion auf eine Bestimmung, dass ein Notfall vorliegt, die Netzwerkkennung des ersten Netzwerks und die Zellkennung des ersten Netzwerks in seine übertragenen Signale aufnimmt; und
    Bewirken, dass die zweite Basisstation nicht länger die Netzwerkkennung des ersten Netzwerks und die Zellkennung des ersten Netzwerks in ihren übertragenen Signalen enthält, wenn der Notfall offenbar nicht länger vorliegt.

7. Verfahren nach Anspruch 6, wobei die zweite Basisstation, die zu einem zweiten von dem ersten Netzwerk verschiedenen Netzwerk gehört, über einen Zeitraum wechselweise Signale überträgt, die die Netzwerkkennung und die Zellkennung sowohl des ersten als auch des zweiten Netzwerks enthalten, und Signale, die nur die Netzwerkkennung des zweiten Netzwerks und die Zellkennung des zweiten Netzwerks enthalten, solange der Notfall vorliegt.

8. Verfahren nach Anspruch 7, wobei die erste Basisstation über einen Zeitraum wechselweise Signale mit der Netzwerkkennung des ersten Netzwerks und der Zellkennung nur des ersten Netzwerks und Signale überträgt, die die Netzwerkkennung und die Zellkennung sowohl des ersten als auch des zweiten Netzwerks enthalten.

9. Verfahren nach einem der vorhergehenden Ansprüche, umfassend nach dem Lokalisieren der mobilen Vorrichtung:

    Senden einer Mitteilung von der ersten Basisstation an die mobile Vorrichtung, die den bestimmten Standort verwendet.

10. Verfahren nach einem der vorhergehenden Ansprüche, wobei die Anzahl der mindestens einen ersten Basisstation und der mindestens einen zweiten Basisstation mindestens insgesamt drei beträgt und wobei das Lokalisieren eine Trilateration der mobilen Vorrichtung unter Verwendung von Messberichten in den mindestens drei Basisstationen umfasst.

11. Drahtloses Kommunikationssystem, umfassend:

    eine mobile Vorrichtung (UE2);
    Lokalisierungsmittel zum Lokalisieren der mobilen Vorrichtung;
    mindestens eine erste Basisstation (BS2) mit bekanntem ersten Standort, die zur drahtlosen Kommunikation mit der mobilen Vorrichtung durch Übertragung von Signalen, die eine Netzwerkkennung (PLMN-ID 2) eines ersten von der mobilen Vorrichtung erkannten Netzwerks (n/w 2) sowie eine Zellkennung des ersten Netzwerks enthalten, mit einer ersten Leistung angeordnet ist; und
    mindestens eine zweite Basisstation (BS1, BS3) an einem bekannten zweiten Standort;
    wobei:

        die mindestens eine zweite Basisstation auf eine Notfallbenachrichtigung reagiert und vorübergehend Signale, die die Netzwerkkennung (PLMN-ID 2) des ersten Netzwerks (n/w 2) sowie eine Zellkennung des ersten Netzwerks enthalten, mit einer zweiten Leistung überträgt;
        die mobile Vorrichtung zum Messen der von der ersten und der zweiten Basisstation übertragenen Signale und zum Berichten der Messergebnisse an die erste Basisstation angeordnet ist; und
        die Lokalisierungsmittel zum Lokalisieren der mobilen Vorrichtung auf der Grundlage der Messberichte, der ersten und der zweiten Übertragungsleistung und des ersten und des zweiten Standorts angeordnet sind,
        **dadurch gekennzeichnet, dass** die mindestens eine zweite Basisstation (BS1, BS3) zu einem zweiten Netzwerk (n/w 1, n/w 3) gehört, das nicht das Heimnetzwerk der mobilen Vorrichtung ist, wobei das zweite Netzwerk von dem ersten Netzwerk (n/w 2), das das Heimnetzwerk der mobilen Vorrichtung ist, verschieden ist, wobei die zweite Basisstation dazu konfiguriert ist, vorübergehend die Netzwerkkennung des ersten Netzwerks und die Zellkennung des ersten Netzwerks in seine übertragenen Signalen aufzunehmen.

**12.** Basisstation (BS1, BS3), die zum Betreiben einer zweiten Basisstation in dem drahtlosen Kommunikationssystem nach Anspruch 11 konfiguriert ist.

**13.** Mobile Vorrichtung (Config. BS1, Config. BS2), die dazu konfiguriert ist, vorübergehend als eine zweite Basisstation an dem bekannten zweiten Standort des drahtlosen Kommunikationssystems nach Anspruch 11 betrieben zu werden, um die Signale mit der zweiten Übertragungsleistung, die die Netzwerkkennung des ersten Netzwerks und die Zellkennung des ersten Netzwerks enthalten, zu übertragen.

**14.** Software, die bei der Ausführung auf einem Prozessor einer Kommunikationsvorrichtung bewirkt, dass die Vorrichtung als Basisstation nach Anspruch 12 oder als mobile Vorrichtung nach Anspruch 13 betrieben wird.

## Revendications

**1.** Procédé de localisation d'un dispositif mobile (UE2) en cas d'urgence, comprenant les étapes ci-dessous consistant à :

dans au moins une première station de base (BS2), à un premier emplacement connu, communiquer par voie hertzienne avec le dispositif mobile en transmettant des signaux présentant une première puissance et incluant un identifiant de réseau (PLMN-ID 2) d'un premier réseau (n/w 2) reconnu par le dispositif mobile, et un identifiant de cellule pour le premier réseau ;
dans au moins une seconde station de base (BS1, BS3), à un second emplacement connu, transmettre temporairement des signaux présentant une seconde puissance et incluant ledit identifiant de réseau (PLMN-ID 2) du premier réseau (n/w 2) et un identifiant de cellule pour le premier réseau ;
dans le dispositif mobile (UE2), mesurer les signaux transmis par les première et seconde stations de base, et rendre compte de résultats de mesure à la première station de base ; et
localiser le dispositif mobile sur la base des rapports de mesure, des première et seconde puissances de transmission et des premier et second emplacements ;
**caractérisé en ce que** ladite au moins une seconde station de base (BS1, BS3) appartient à un second réseau (n/w 1, n/w 3) auquel le dispositif mobile n'est pas abonné, le second réseau étant différent du premier réseau (n/w 2) auquel le dispositif mobile est abonné, et la seconde station de base inclut temporairement ledit identifiant de réseau du premier réseau et ledit identifiant de cellule pour le premier réseau dans ses signaux transmis.

**2.** Procédé selon la revendication 1, comprenant en outre l'étape consistant à déterminer (S12) si une dite seconde station de base existe dans une plage du dispositif mobile, et le cas échéant, à ordonner (S16) à la seconde station de base d'inclure temporairement l'identifiant de réseau du premier réseau et ledit identifiant de cellule pour le premier réseau dans ses signaux transmis, conjointement avec un identifiant de réseau du second réseau et un identifiant de cellule pour le second réseau.

**3.** Procédé selon l'une quelconque des revendications précédentes, dans lequel au moins un autre dispositif mobile (Config. BS1, Config. BS2) est configuré de manière à fonctionner temporairement en tant qu'au moins une dite seconde station de base audit second emplacement connu, respectivement, afin de transmettre lesdits signaux présentant la seconde puissance de transmission et incluant l'identifiant de réseau du premier réseau et l'identifiant de cellule pour le premier réseau.

**4.** Procédé selon la revendication 3, dans lequel le second emplacement est connu en faisant appel à une fonction de positionnement dudit autre dispositif mobile.

**5.** Procédé selon la revendication 3, dans lequel le second emplacement est connu d'un utilisateur dudit autre dispositif mobile en amenant ledit dispositif à un emplacement connu.

**6.** Procédé selon l'une quelconque des revendications précédentes, comprenant en outre les étapes ci-dessous consistant à :

amener la seconde station de base à inclure, dans ses signaux transmis, l'identifiant de réseau du premier réseau et ledit identifiant de cellule pour le premier réseau, en réponse à une détermination selon laquelle une situation d'urgence existe ; et
amener la seconde station de base à cesser d'inclure l'identifiant de réseau du premier réseau et ledit identifiant de cellule pour le premier réseau lorsqu'il est déterminé que la situation d'urgence n'existe plus.

**7.** Procédé selon la revendication 6, dans lequel, tandis que la situation d'urgence existe, une dite seconde station de base appartenant à un second réseau, différent du premier réseau, alterne des périodes de transmission de signaux incluant les identifiants de réseaux et des identifiants de cellules à la fois pour les premier et second réseaux, avec des périodes de transmission de signaux comportant uniquement l'identifiant de réseau du second réseau et l'identifiant de cellule pour le second réseau.

8. Procédé selon la revendication 7, dans lequel, tandis que la situation d'urgence existe, la première station de base alterne des périodes de transmission de signaux incluant l'identifiant de réseau du premier réseau et l'identifiant de cellule uniquement pour le premier réseau, avec des périodes de transmission de signaux incluant les identifiants de réseau et les identifiants de cellules à la fois pour les premier et second réseaux.

9. Procédé selon l'une quelconque des revendications précédentes, comprenant en outre, après l'étape de localisation du dispositif mobile, l'étape ci-dessous dans laquelle :

la première station de base envoie un message, au dispositif mobile, qui tient compte de l'emplacement déterminé.

10. Procédé selon l'une quelconque des revendications précédentes, dans lequel le nombre total desdites au moins une première station de base et seconde station de base est au moins égal à trois, et l'étape de localisation comprend la trilatération du dispositif mobile en utilisant des rapports de mesure sur lesdites au moins trois stations de base.

11. Système de communication sans fil comprenant :

un dispositif mobile (UE2) ;
un moyen de localisation pour localiser le dispositif mobile ;
au moins une première station de base (BS2), à un premier emplacement connu, agencée à des fins de communication sans fil avec le dispositif mobile par la transmission de signaux présentant une première puissance et incluant un identifiant de réseau (PLMN-ID 2) d'un premier réseau (n/w 2) reconnu par le dispositif mobile et un identifiant de cellule pour le premier réseau ; et
au moins une seconde station de base (BB1, BS3), à un second emplacement connu ; dans lequel :

ladite au moins une seconde station de base répond à une notification d'urgence pour transmettre temporairement des signaux présentant une seconde puissance et incluant ledit identifiant de réseau (PLMN-ID 2) du premier réseau (n/w 2) et un identifiant de cellule pour le premier réseau ;
le dispositif mobile est agencé de manière à mesurer les signaux transmis par les première et seconde stations de base et à rendre compte de résultats de mesure à la première station de base ; et
le moyen de localisation est agencé de manière à localiser le dispositif mobile sur la base des rapports de mesure, des première et seconde puissances de transmission, et des premier et second emplacements ; **caractérisé en ce que** ladite au moins une seconde station de base (BS1, BS3) appartient à un second réseau (n/w 1, n/w 3) auquel le dispositif mobile n'est pas abonné, le second réseau étant différent du premier réseau (n/w 2) auquel le dispositif mobile est abonné, et la seconde station de base est configurée de manière à inclure temporairement ledit identifiant de réseau du premier réseau et ledit identifiant de cellule pour le premier réseau dans ses signaux transmis.

12. Station de base (BS1, BS3) configurée de manière à fonctionner en tant qu'une seconde station de base dans le système de communication sans fil selon la revendication 11.

13. Dispositif mobile (Config. BS1, Config. BS2) configuré de manière à fonctionner temporairement en tant qu'une seconde station de base audit second emplacement connu dans le système de communication sans fil selon la revendication 11, afin de transmettre lesdits signaux présentant la seconde puissance de transmission et incluant l'identifiant de réseau du premier réseau et l'identifiant de cellule pour le premier réseau.

14. Logiciel qui, lorsqu'il est exécuté sur un processeur d'un dispositif de communication, amène le dispositif à fonctionner en tant que la station de base selon la revendication 12 ou en tant que le dispositif mobile selon la revendication 13.

*FIGURE 1*

FIGURE 2

FIGURE 3

S10 | Network is notified to localize UEs in a target area

S12 — Other networks' BSs present?

No (second solution)

Yes (first solution)

Notify pre-selected UEs to report GPS locations or move to pre-defined locations | S14

S16 | Instruct other BSs to transmit PLMN-IDs, new cell-IDs

Instruct suitable UEs to operate as configured BSs. Transmit PLMN cell IDs, and reference symbols | S18

S20 | Instruct UEs in the cell to provide signal strength measurements

S22 | Own BS collects meas. and executes localization procedures

S24 | Provide warning messages to UEs in the vulnerable area

S26 | Return other network BSs/ own UEs back to original operation mode

FIGURE 4

FIGURE 5

FIGURE 6

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002168989 A
- EP 1289331 A
- US 2003134647 A
- US 2012302254 A